# EUROPEAN PATENT APPLICATION

(11) **EP 4 770 061 A1**
(43) Date of publication of application: **01.07.2026**
(21) Application number: 24905547.6
(22) Date of filing: 02.08.2024
(51) Int. Cl.: H04M 1/02

(54) **HOUSING ASSEMBLY AND ELECTRONIC DEVICE**

(30) Priority: 18.12.2023 CN 202311750719
(71) Applicant: Honor Device Co., Ltd., Shenzhen, Guangdong 518040 (CN)
(72) Inventor: YANG, Hongbin, Shenzhen, Guangdong 518040 (CN); TANG, Yangjie, Shenzhen, Guangdong 518040 (CN); LIU, Jingbo, Shenzhen, Guangdong 518040 (CN)
(74) Representative: Gill Jennings & Every LLP
(86) International application number: PCT/CN2024/109480
(87) International publication number: WO 2025/130051

(57) **Abstract**

This application provides a housing assembly and an electronic device. The housing assembly includes an outer decoration member, an inner decoration member, a first sealing adhesive layer, an outer housing, and a second sealing adhesive layer. The inner decoration member includes an inner sealing ring, a retaining ring, and an outer sealing ring. An annular inner wall of a through hole of the outer housing includes an embedded annular part close to a center of the through hole, and an exposed annular part away from the center of the through hole and connected to the embedded annular part. The outer sealing ring includes a first outer sealing interval ring, the first outer sealing interval ring extends to the exposed annular part of the outer housing, the second sealing adhesive layer includes a first interval adhesive layer, and the first interval adhesive layer is sealedly connected between the first outer sealing interval ring of the outer sealing ring and the exposed annular part. The first outer sealing interval ring of the inner decoration member "extends" to the exposed annular part of the outer housing, to provide extended mounting space for a large-size camera, to satisfy a requirement for mounting a large-size camera of an ultra-thin and waterproof mobile phone.

## Description

This application claims priority to Chinese Patent Application No. 202311750719.2, filed with the China National Intellectual Property Administration on December 18, 2023 and entitled "HOUSING ASSEMBLY AND ELECTRONIC DEVICE ", which is incorporated herein by reference in its entirety.

### TECHNICAL FIELD

The present invention relates to the field of electronic device technologies, and in particular, to a housing assembly and an electronic device.

### BACKGROUND

A camera decoration member of a mobile phone is usually mounted on a rear housing of the mobile phone, and aims to beautify an appearance of a camera and provide an additional function like a waterproofing function.

However, a current camera decoration member of the mobile phone occupies large internal space, and consequently, a camera with a larger size cannot be directly accommodated inside the mobile phone. To resolve this problem, a thickness of the mobile phone needs to be increased, to adapt to a mounting space requirement of the camera with a larger size. However, this causes the mobile phone to become thick, and cannot satisfy a requirement of a user for using an ultra-thin mobile phone.

### SUMMARY

In view of this, this application provides a housing assembly and an electronic device, to satisfy a requirement for mounting a large-size camera of an ultra-thin and waterproof mobile phone.

According to a first aspect of this application, a housing assembly is provided, including: an outer decoration member, where at least one camera window is disposed on the outer decoration member; an inner decoration member, including an inner sealing ring, a retaining ring, and an outer sealing ring, where the inner sealing ring is stacked on an inner periphery of the outer decoration member, the retaining ring is bent and extends from an outer edge of the inner sealing ring toward an inner side of the outer decoration member, and is connected to the outer sealing ring, and the outer sealing ring, the retaining ring, and an inner side of an outer edge of the outer decoration member form an annular caulking groove that opens outward; a first sealing adhesive layer, sealedly connected between the inner sealing ring and the inner periphery of the outer decoration member; an outer housing, where the outer housing has a through hole, an annular inner wall of the through hole of the outer housing includes an embedded annular part close to a center of the through hole, and an exposed annular part away from the center of the through hole and connected to the embedded annular part, the embedded annular part is embedded in the annular caulking groove, and the exposed annular part is located outside the annular caulking groove; and a second sealing adhesive layer, sealedly connected between the annular inner wall of the through hole and the outer sealing ring, where the outer sealing ring includes a first outer sealing interval ring, and the first outer sealing interval ring extends to the exposed annular part of the outer housing; and the second sealing adhesive layer includes a first interval adhesive layer, and the first interval adhesive layer is sealedly connected between the first outer sealing interval ring of the outer sealing ring and the exposed annular part. In this embodiment of this solution, the first outer sealing interval ring of the inner decoration member extends to the exposed annular part of the outer housing, to provide "extended mounting space" for the large-size camera, to satisfy the requirement for mounting a large-size camera of an ultra-thin and waterproof mobile phone.

In a possible implementation, the first outer sealing interval ring, the retaining ring, and the inner side of the outer edge of the outer decoration member form a first interval groove of the annular caulking groove; the embedded annular part includes a first interval inner wall, and the first interval inner wall is embedded in the first interval groove; and in the first interval groove, a distance between an outer surface of the retaining ring and an edge of the outer decoration member ranges from 0.5 mm to 2 mm. In this embodiment of this solution, the retaining ring is close to the edge of the outer decoration member, so that the "extended" retaining ring can provide the "extended mounting space" for the large-size camera, to satisfy the requirement for mounting a large-size camera of an ultra-thin and waterproof mobile phone.

In a possible implementation, the exposed annular part extends toward the center of the through hole, and forms a curved convex ring away from an inner side of the outer housing; and the first interval adhesive layer includes: a double-sided adhesive layer matching a shape of the curved convex ring and having a curved shape. In this embodiment of this solution, the exposed annular part uses a curved structure, which can provide a good and smooth touch for a user.

In a possible implementation, the first interval adhesive layer further includes: the double-sided adhesive layer and a glue dispensing layer, where the double-sided adhesive layer matches the shape of the curved convex ring and has the curved shape; and the glue dispensing layer fills a gap between the double-sided adhesive layer and the retaining ring, and the glue dispensing layer is formed by curing a fluid adhesive. In this embodiment of this solution, the double-sided adhesive layer and the glue dispensing layer are used in combination. The glue dispensing layer uses the fluid adhesive, so that gaps of different sizes in different housing assemblies can be conveniently filled and sealed.

In a possible implementation, the double-sided adhesive layer has an annular structure, and a plurality of notches are provided at intervals on at least one of an edge of an inner sealing ring and an edge of an outer sealing ring of the double-sided adhesive layer. By providing the plurality of notches, a radian of the double-sided adhesive layer may be conveniently adjusted to adapt to sizes of radians of the first outer sealing interval ring and the exposed annular part that are sealedly connected.

In a possible implementation, the embedded annular part extends toward the center of the through hole, and forms a planar convex ring. In this solution, the planar convex ring is used by the embedded annular part, so that the embedded annular part can be stably embedded in the annular caulking groove, thereby improving a life span of the housing assembly.

In a possible implementation, the inner decoration member is made of a plastic material, which can reduce an overall weight of the housing assembly.

In a possible implementation, a thickness of the second sealing adhesive layer is 0. 35 ± 0. 05 mm, so that after a material of the inner decoration member is replaced with plastic, good sealing between the first outer sealing interval ring and the exposed annular part is implemented.

In a possible implementation, the outer housing includes: a base layer and a polyurethane layer that are laminated, where the polyurethane layer is located on an outer surface of the outer housing, and the base layer is located on an inner surface of the outer housing. An outer housing made of a PU material has a plurality of advantages such as durability, softness, and anti-fingerprint.

In a possible implementation, the outer sealing ring includes a second outer sealing interval ring, and the second outer sealing interval ring extends to the embedded annular part; and the second sealing adhesive layer includes a second interval adhesive layer, and the second interval adhesive layer is sealedly connected between the second outer sealing interval ring and the embedded annular part. In this embodiment of this solution, the first outer sealing interval ring and the second outer sealing interval ring are both partial outer sealing rings. The two outer sealing interval rings cooperate, so that the second interval adhesive layer provides a good bonding effect on the inner decoration member and the outer housing.

In a possible implementation, the second outer sealing interval ring, the retaining ring, and the inner side of the outer edge of the outer decoration member form a second interval groove of the annular caulking groove; the embedded annular part includes a second interval inner wall, and the second interval inner wall is embedded in the second interval groove; and in the second interval groove, a distance between an outer surface of the retaining ring and an edge of the outer decoration member ranges from 2.5 mm to 4 mm. In comparison with the first interval groove, a retaining ring of the second interval groove is closer to the center of the through hole of the outer housing. Therefore, the second interval groove is deeper, the embedded annular part of the outer housing is longer, the connection is more stable, and the second interval inner wall embedded in the second interval groove is not easy to be detached and cause a problem of warping.

In a possible implementation, the first interval adhesive layer is connected to the second interval adhesive layer end-to-end in a staggered manner, to form the annular second sealing adhesive layer; and the first outer sealing interval ring is connected to the second outer sealing interval ring end-to-end, to form the annular outer sealing ring, thereby facilitating assembly and improving assembly efficiency.

In a possible implementation, the housing assembly further includes: a fixed adhesive layer, where the second interval inner wall is connected to the outer decoration member by using the fixed adhesive layer; and the first interval inner wall abuts against the outer decoration member, so that stability of connections between the outer housing and inner and outer decoration rings can be further improved.

In a possible implementation, the housing assembly further includes: a waterproof and breathable layer; and a window cover plate, where a window caulking groove is provided on an outer side surface of the outer decoration member, and the at least one camera window and a through ventilation port are disposed at a bottom of the window caulking groove; the window cover plate is disposed in the window caulking groove and covers the at least one camera window; and a breathable gap exists between a peripheral edge of the window cover plate and a peripheral edge of the window caulking groove, at least one ventilation channel communicating the ventilation port and the breathable gap is further provided at the bottom of the window caulking groove, and the waterproof and breathable layer covers the ventilation port, to reduce a problem that internal atmospheric pressure of an electronic device greatly changes, thereby reducing a problem of abnormal operation of an electronic element.

In a possible implementation, the inner decoration member further includes: at least one support member extends toward an interior of the outer housing, where the support member may form support with a mainboard inside the electronic device, to stably support the inner decoration member.

In a possible implementation, the housing assembly further includes: at least one locking screw, where the locking screw is inserted through a through hole of the inner sealing ring of the inner decoration member, and is locked to an internal thread of the outer decoration member, to implement locking between the inner decoration member and the outer decoration member.

According to a second aspect, an embodiment of this application provides an electronic device, including: the housing assembly according to any one of the foregoing items; at least one camera, where an image acquisition end of each camera faces a camera window corresponding to the camera, and the electronic device has characteristics of being waterproof, dustproof, and ultra-thin.

In a possible implementation, the at least one camera includes a first camera, the at least one camera window includes a first window, and an image acquisition end of the first camera faces the first window; a first corner of the first camera is located at a corner of the inner decoration member close to the first outer sealing interval ring; and the first camera is a periscope camera, and the ultra-thin and waterproof electronic device can support the periscope camera.

In a possible implementation, the at least one camera includes a second camera and a third camera, the at least one camera window includes a second window and a third window, an image acquisition end of the second camera faces the second window, and an image acquisition end of the third camera faces the third window; the first camera has a rectangular structure, a size of the second camera and a size of the third camera are separately smaller than a size of the first camera, the second camera and the third camera are located on a side of the first camera in a width direction, and the second camera and the third camera are arranged in a length direction of the first camera; in the inner decoration member, the outer sealing ring includes the second outer sealing interval ring, the second outer sealing interval ring extends to the embedded annular part of the outer housing, the second sealing adhesive layer includes the second interval adhesive layer, and the second interval adhesive layer is sealedly connected between the second outer sealing interval ring and the embedded annular part; and a first corner of the second camera is located at a corner of the inner decoration member close to the second outer sealing interval. Through the foregoing arrangement manner, proper arrangement of cameras of different sizes in the electronic device can be implemented, thereby implementing ultra-thinning of a multi-camera electronic device.

In the technical solutions provided in embodiments of this solution, the housing assembly includes the outer decoration member, the inner decoration member, the first sealing adhesive layer, the outer housing, and the second sealing adhesive layer. The at least one camera window is disposed on the outer decoration member, and may be used by the camera to acquire an image. The inner decoration member includes the inner sealing ring, the retaining ring, and the outer sealing ring, where the inner sealing ring is stacked on the inner periphery of the outer decoration member, the retaining ring is bent and extends from the outer edge of the inner sealing ring toward the inner side of the outer decoration member, and is connected to the outer sealing ring, and the outer sealing ring, the retaining ring, and the inner side of the outer edge of the outer decoration member form the annular caulking groove that opens outward. The first sealing adhesive layer is sealedly connected between the inner sealing ring and the inner periphery of the outer decoration member. The outer housing has the through hole, the annular inner wall of the through hole of the outer housing includes the embedded annular part close to the center of the through hole, and the exposed annular part away from the center of the through hole and connected to the embedded annular part, the embedded annular part is embedded in the annular caulking groove, and the exposed annular part is located outside the annular caulking groove. The second sealing adhesive layer is sealedly connected between the annular inner wall of the through hole and the outer sealing ring. The outer sealing ring includes the first outer sealing interval ring, the first outer sealing interval ring extends to the exposed annular part of the outer housing, the second sealing adhesive layer includes the first interval adhesive layer, and the first interval adhesive layer is sealedly connected between the first outer sealing interval ring of the outer sealing ring and the exposed annular part. In this solution, the first outer sealing interval ring of the inner decoration member "extends" to the exposed annular part of the outer housing, to provide the extended mounting space for the large-size camera, to satisfy the requirement for mounting a large-size camera of an ultra-thin and waterproof mobile phone.

Certainly, any product or method for implementing this application does not necessarily need to simultaneously achieve all the foregoing advantages.

### BRIEF DESCRIPTION OF DRAWINGS

The foregoing and/or additional aspects and advantages of the present invention will become apparent and comprehensible in the descriptions made with reference to the following accompanying drawings, where
FIG. 1 is a schematic diagram of a structure of a housing assembly according to an embodiment of the present invention;
FIG. 2 is a cross-sectional view taken along A-A of FIG. 1;
FIG. 3 is an enlarged view of A in FIG. 2;
FIG. 4 is a schematic diagram of a front structure of a combination of an inner decoration member and an outer decoration member of a housing assembly according to an embodiment of the present invention;
FIG. 5 is a schematic structural exploded view of an assembled structure of an inner decoration member and a waterproof and breathable layer of a housing assembly according to an embodiment of the present invention;
FIG. 6 is a schematic diagram of a disassembled structure of a housing assembly according to an embodiment of the present invention;
FIG. 7 is a schematic structural exploded view of some components of a housing assembly according to an embodiment of the present invention;
FIG. 8 is an enlarged view of B in FIG. 2;
FIG. 9 is a schematic diagram of a structure of an inner decoration member of a housing assembly from a first perspective according to an embodiment of the present invention;
FIG. 10 is a schematic diagram of a structure of an inner decoration member of a housing assembly from a second perspective according to an embodiment of the present invention;
FIG. 11 is a schematic diagram of a rear structure of a combination of an inner decoration member and an outer decoration member of a housing assembly according to an embodiment of the present invention;
FIG. 12 is a schematic cross-sectional view of a structure taken along B-B in FIG. 11;
FIG. 13 is a schematic diagram of an internal partial structure of an electronic device according to an embodiment of the present invention; and
FIG. 14 is a schematic partial cross-sectional view of a structure of a position of a first camera of an electronic device according to an embodiment of the present invention.

### List of reference numerals:

outer decoration member 10; camera window 11; first window 111; second window 112; third window 113; ventilation port 12; ventilation channel 13; inner decoration member 20; inner sealing ring 21; retaining ring 22; outer sealing ring 23; first outer sealing interval ring 231; second outer sealing interval ring 232; support member 24; first sealing adhesive layer 30; outer housing 40; base layer 40a; polyurethane layer 40b; annular inner wall 41; embedded annular part 411; exposed annular part 412; first interval inner wall 413; second interval inner wall 414; second sealing adhesive layer 50; first interval adhesive layer 51; double-sided adhesive layer 511; gap 512; notch 513; second interval adhesive layer 52; fixed adhesive layer 60; waterproof and breathable layer 70; annular adhesive layer 71; window cover plate 80; window sealing adhesive layer 81; locking screw 90; first camera 101; second camera 102; and third camera 103.

### DESCRIPTION OF EMBODIMENTS

Embodiments of the present invention are described in detail below, and examples of the embodiments are shown in the accompanying drawings, where the same or similar elements or the elements having the same or similar functions are denoted by the same or similar reference numerals throughout the descriptions. The embodiments described below with reference to the accompanying drawings are exemplary, and are intended to explain the present invention, but cannot be construed as a limitation on the present invention.

In the related art, a camera assembly on a rear of a mobile phone usually includes a plurality of cameras, such as a wide-angle camera and a telephoto camera. To take visual appeal and waterproof and dustproof functions into consideration, a hole is opened at a position of a camera of a rear housing of the mobile phone, and an inner decoration member and an outer decoration member are mounted. The inner decoration member is disposed inside the mobile phone, and the outer decoration member is disposed outside the mobile phone. The inner decoration member and the outer decoration member separately form a seal with the rear housing of the mobile phone. An inner decoration ring is located below an orthographic projection area of the outer decoration member on the rear housing of the mobile phone. In other words, the inner decoration ring is located right below an outer decoration ring, and the inner decoration ring occupies large space right below the outer decoration ring.

With an increasing demand for higher camera quality among users, a quantity of cameras mounted in the mobile phone is increasing, a volume of the camera is increasingly larger (the camera is increased in a length direction, the length direction of the camera is perpendicular to a thickness direction of the camera, and the thickness direction of the camera is the same as a thickness direction of the mobile phone), and space required by the mounted camera is also increased. Currently, due to a limitation of internal mounting space of the mobile phone, a large-size camera may conflict with space occupied by the inner decoration ring. Currently, the outer decoration ring usually needs to be disposed upward, to increase a thickness of the mobile phone, to increase mounting space of the camera inside the mobile phone. A problem is that the thickness of the mobile phone is increased, which deviates from a requirement of the user for using an ultra-thin mobile phone.

Therefore, the present invention provides a housing assembly and an electronic device.

Specifically, a housing assembly and an electronic device according to embodiments of the present invention are described below with reference to the accompanying drawings.

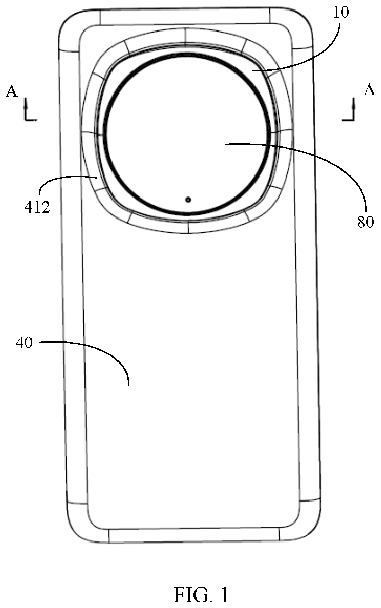

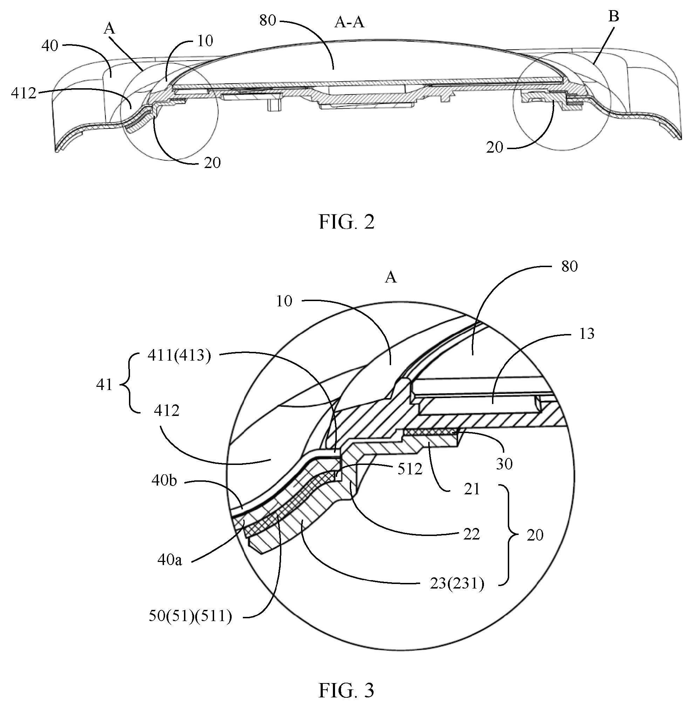

FIG. 1 is a schematic diagram of a structure of a housing assembly according to an embodiment of the present invention. FIG. 2 is a cross-sectional view taken along A-A of FIG. 1. FIG. 3 is an enlarged view of A in FIG. 2. It should be noted that the housing assembly according to embodiments of the present invention may be used in an electronic device having a camera function in the related art, for example, a digital camera, a smartphone, a tablet computer, a camera, a television, a notebook computer, a network camera, an event data recorder, an intelligent wearable device (such as a smartwatch and smart glasses), a point of sales (Point of Sales, POS), an augmented reality (augmented reality, AR) device, and a virtual reality (virtual reality, VR) device.

During implementation, when the housing assembly is used in a rear camera of the electronic device, the housing assembly may be a rear housing assembly of the electronic device. It is easily understood that, when the housing assembly is used in a front camera of the electronic device, the housing assembly may be a front housing assembly of the electronic device. In this embodiment of this solution, only an example in which the housing assembly may be the rear housing assembly of the electronic device is used. It may be understood that the rear housing assembly is used in the electronic device. The electronic device further includes a front housing assembly adapted to the rear housing assembly, and the front housing assembly may be snapped to the rear housing assembly. In this embodiment, an outer side of the housing assembly may be understood as a side away from an interior of the electronic device. Similarly, an inner side of the housing assembly may be understood as a side toward the interior of the electronic device.

As shown in FIG. 1, FIG. 2, and FIG. 3, the housing assembly includes: an outer decoration member 10, an inner decoration member 20, a first sealing adhesive layer 30, an outer housing 40, and a second sealing adhesive layer 50.

At least one camera window 11 is disposed on the outer decoration member 10. The inner decoration member 20 includes an inner sealing ring 21, a retaining ring 22, and an outer sealing ring 23, where the inner sealing ring 21 is stacked on an inner periphery of the outer decoration member 10, the retaining ring 22 is bent and extends from an outer edge of the inner sealing ring 21 toward an inner side of the outer decoration member 10, and is connected to the outer sealing ring 23, and the outer sealing ring 23, the retaining ring 22, and an inner side of an outer edge of the outer decoration member 10 form an annular caulking groove that opens outward. The first sealing adhesive layer 30 is sealedly connected between the inner sealing ring 21 and the inner periphery of the outer decoration member 10. The outer housing 40 has a through hole, an annular inner wall 41 of the through hole of the outer housing 40 includes an embedded annular part 411 close to a center of the through hole, and an exposed annular part 412 away from the center of the through hole and connected to the embedded annular part 411, the embedded annular part 411 is embedded in the annular caulking groove, and the exposed annular part 412 is located outside the annular caulking groove. The second sealing adhesive layer 50 is sealedly connected between the annular inner wall 41 of the through hole and the outer sealing ring 23. The outer sealing ring 23 includes a first outer sealing interval ring 231, and the first outer sealing interval ring 231 extends to the exposed annular part 412 of the outer housing 40. The second sealing adhesive layer 50 includes a first interval adhesive layer 51, and the first interval adhesive layer 51 is sealedly connected between the first outer sealing interval ring 231 of the outer sealing ring 23 and the exposed annular part 412.

In the technical solutions provided in embodiments of this solution, the housing assembly includes the outer decoration member 10, the inner decoration member 20, the first sealing adhesive layer 30, the outer housing 40, and the second sealing adhesive layer 50. The at least one camera window 11 is disposed on the outer decoration member 10, and may be used by the camera to acquire an image.

The inner decoration member 20 includes the inner sealing ring 21, the retaining ring 22, and the outer sealing ring 23, where the inner sealing ring 21 is stacked on the inner periphery of the outer decoration member 10, the retaining ring 22 is bent and extends from the outer edge of the inner sealing ring 21 toward the inner side of the outer decoration member 10, and is connected to the outer sealing ring 23, and the outer sealing ring 23, the retaining ring 22, and the inner side of the outer edge of the outer decoration member 10 form the annular caulking groove that opens outward. The first sealing adhesive layer 30 is sealedly connected between the inner sealing ring 21 and the inner periphery of the outer decoration member 10, and may form a seal in a direction of an outer side of the outer housing 40, to prevent water vapor from passing between the inner decoration member 20 and the outer decoration member 10.

The outer housing 40 has the through hole, the annular inner wall 41 of the through hole of the outer housing 40 includes the embedded annular part 411 close to the center of the through hole, and the exposed annular part 412 away from the center of the through hole and connected to the embedded annular part 411, the embedded annular part 411 is embedded in the annular caulking groove, and the exposed annular part 412 is located outside the annular caulking groove. The second sealing adhesive layer 50 is sealedly connected between the annular inner wall 41 of the through hole and the outer sealing ring 23, to prevent the water vapor from passing between the inner decoration member 20 and the outer housing 40.

Therefore, the first sealing adhesive layer 30 and the second sealing adhesive layer 50 may implement a sealed connection between the outer decoration member 10, the inner decoration member 20, and the outer housing 40, which is applicable to an electronic device having a requirement of being waterproof and dustproof.

In this solution, the first outer sealing interval ring 231 of the inner decoration member 20 extends to the exposed annular part 412 of the outer housing 40, and the first interval adhesive layer 51 of the second sealing adhesive layer 50 is sealedly connected between the first outer sealing interval ring 231 of the outer sealing ring 23 and the exposed annular part 412. In comparison with the related art, because the first outer sealing interval ring 231 of the inner decoration member 20 extends to the exposed annular part 412 of the outer housing 40, an inner decoration ring is "transferred" outward from a position below an orthographic projection area of the outer decoration member on a rear housing of a mobile phone, to provide "extended mounting space" for a large-size camera (for example, the camera is increased in a length direction), to satisfy a requirement for mounting a large-size camera of an ultra-thin and waterproof mobile phone.

An outer decoration ring is configured to be disposed on a face of the outer side of the outer housing 40, is exposed on the outer side of the outer housing 40, and may have a decorative effect. The outer decoration ring may be usually made of a metal material, but is not limited to use of another material like plastic. As shown in FIG. 2 and FIG. 3, specifically, a window caulking groove may be provided on an outer side surface of the outer decoration member 10, the housing assembly further includes a window cover plate 80, the at least one camera window 11 is disposed at a bottom of the window caulking groove, and the window cover plate 80 is disposed in the window caulking groove and covers the at least one camera window 11.

As shown in FIG. 1, FIG. 2, and FIG. 3, in this embodiment of this solution, the first sealing adhesive layer 30 may implement sealing between the outer decoration member 10 and the inner decoration member 20. The second sealing adhesive layer 50 may implement sealing between the inner decoration member 20 and the annular inner wall 41 of the through hole of the outer housing 40. The window cover plate 80 covers the at least one camera window 11, and may implement sealing on the camera window 11. In this way, at the through hole of the housing assembly, the outer decoration member 10, the inner decoration member 20, and the outer housing 40 form a sealed whole, so that a waterproof requirement of the electronic device can be achieved.

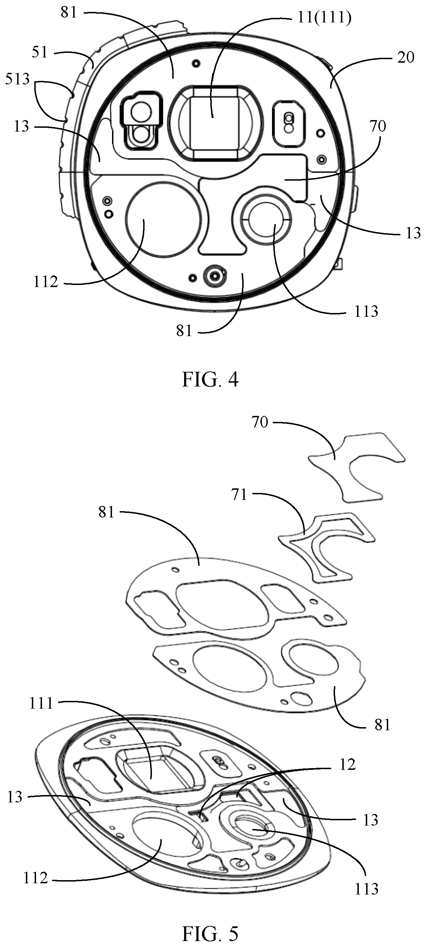

FIG. 4 is a schematic diagram of a structure of a combination of the inner decoration member 20 and the outer decoration member 10 of the housing assembly according to an embodiment of the present invention. FIG. 5 is a schematic structural exploded view of an assembled structure of the inner decoration member 20 and a waterproof and breathable layer 70 of the housing assembly according to an embodiment of the present invention. As shown in FIG. 4 and FIG. 5, it is easily understood that, in this embodiment of sealing the camera window 11 by the camera window 11, a window sealing adhesive layer 81 may be used to cover a periphery of the camera window 11, and the window cover plate 80 is sealedly connected to the window caulking groove of the outer decoration member 10, so that an IPX8 waterproof function of the electronic device can be achieved.

The window cover plate 80 may be a transparent glass cover plate or plastic cover plate, so that light from an outer side of the housing assembly enters a camera at the camera window 11 of the outer decoration member 10 through the window cover plate 80, to help the camera acquire external image information.

A quantity of the camera windows 11 may be determined based on a quantity of cameras that are actually needed. In other words, when the housing assembly is adapted to an electronic device having one camera, there is one camera window 11. When the housing assembly is adapted to an electronic device having two cameras, there are two camera windows 11. When the housing assembly is adapted to an electronic device having three cameras, there are three camera windows 11.

A shape of the outer decoration member 10 may be set based on layout positions of a plurality of cameras of an actual product. Specifically, the shape may be a circle, a triangle, a rectangle, a pentagon, or the like. This is not limited in embodiments of the present invention.

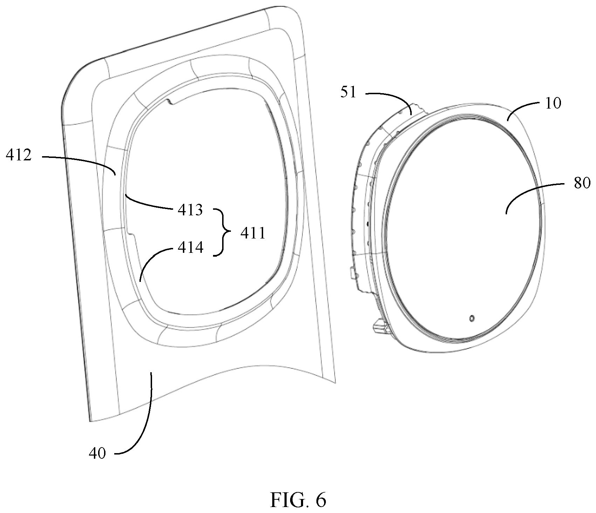

Usually, the inner decoration member 20 completely falls into an orthographic projection of the outer decoration member 10 in the outer housing 40. In other words, the inner decoration member 20 occupies a large amount of space right below the outer decoration member 10. However, right below the outer decoration member 10 is mounting space of the camera. Consequently, it is difficult to directly assemble a camera with a larger size. FIG. 6 is a schematic diagram of a disassembled structure of the housing assembly according to an embodiment of the present invention. As shown in FIG. 3 and FIG. 6, in this solution, the first outer sealing interval ring 231, the retaining ring 22, and the inner side of the outer edge of the outer decoration member 10 form a first interval groove of the annular caulking groove. The embedded annular part 411 includes a first interval inner wall 413, and the first interval inner wall 413 is embedded in the first interval groove. In the first interval groove, a distance between an outer surface of the retaining ring 22 and an edge of the outer decoration member 10 ranges from 0.5 mm to 2 mm.

Because the first outer sealing interval ring 231 of the inner decoration member 20 extends to the exposed annular part 412 of the outer housing 40, and is sealedly connected to the exposed annular part 412 of the outer housing 40, "expansion" can be implemented on a side of the first outer sealing interval of the inner decoration member 20, and the retaining ring 22 can be "moved" to the edge of the outer decoration member 10, thereby reducing space occupied by the inner decoration member 20 occupying the space right below the outer decoration member 10, and providing mounting space for a larger camera. Specifically, at a position of the first interval groove, the retaining ring 22 is "transferred" outward to an edge position of the outer decoration member 10, and a distance between the retaining ring 22 and the edge of the outer decoration member 10 ranges from 0.5 mm to 2 mm, thereby providing larger mounting space for the camera.

As shown in FIG. 3 and FIG. 6, the exposed annular part 412 extends toward the center of the through hole, and forms a curved convex ring away from an inner side of the outer housing 40. The curved convex ring serves as an exposed smooth curved structure, so that a user can obtain a smooth touch when using the electronic device.

As shown in FIG. 3, because the exposed annular part 412 has the curved structure, the first interval adhesive layer 51 includes: a double-sided adhesive layer 511, matching a shape of the curved convex ring, and having a curved shape. The first outer sealing interval ring 231 matches the shape of the curved convex ring, and is an outer sealing interval ring having a curved shape. The double-sided adhesive layer 511 may be a waterproof foam adhesive, to facilitate a well-sealed connection between the first outer sealing interval ring 231 and the exposed annular part 412. During implementation, there is a tolerance in a preparation size of the double-sided adhesive layer 511 having the curved shape. When the double-sided adhesive layer 511 is adhered to the exposed annular part 412 having the curved shape, it is difficult for the double-sided adhesive layer 511 to completely come into contact with and seal the retaining ring 22 of the inner decoration member 20. If a size of the double-sided adhesive layer 511 is made larger, due to the tolerance, the double-sided adhesive layer 511 of a part of the housing assembly exceeds a required length, and the double-sided adhesive layer 511 that exceeds a length covering the retaining ring 22 may be warped, affecting embedding of the embedded annular part 411 of the outer housing 40. If a size of the double-sided adhesive layer 511 is made smaller, causing the double-sided adhesive layer 511 of a part of the housing assembly to be completely adhered to the retaining ring 22, due to the tolerance, the double-sided adhesive layer 511 of another part of the housing assembly cannot satisfy a required length, and cannot reach the retaining ring 22. Consequently, a gap 512 tends to exist between the double-sided adhesive layer 511 and the retaining ring 22, and external water vapor may enter the gap 512 through the gap 512 between the outer edge of the outer decoration member 10 and the outer housing 40, and may gradually penetrate the double-sided adhesive layer 511, causing water to enter the electronic device.

In this solution, the first interval adhesive layer 51 further includes: a glue dispensing layer, where the glue dispensing layer fills the gap 512 between the double-sided adhesive layer 511 and the retaining ring 22. In other words, during assembly, a fluid adhesive may be injected into the gap 512 between the double-sided adhesive layer 511 and the retaining ring 22, to fill the gap 512. By using a waterproof fluid adhesive, it may be convenient to completely fill gaps 512 of different sizes in different housing assemblies. After the injected fluid adhesive is cured, the glue dispensing layer is formed, so that waterproof sealing can be desirably performed on the gap 512.

As shown in FIG. 3 and FIG. 6, in order that the embedded annular part 411 of the outer housing 40 is well embedded in the annular caulking groove, the embedded annular part 411 extends toward the center of the through hole and forms a planar convex ring. The planar convex ring is connected to the curved convex ring. In this solution, the planar convex ring is used by the embedded annular part 411, so that the embedded annular part can be stably embedded in the annular caulking groove, thereby improving a life span of the housing assembly. In addition, in this solution, the first interval adhesive layer 51 includes the glue dispensing layer and the double-sided adhesive layer 511, so that good sealing can be performed on a curved connection part between the planar convex ring and the curved convex ring, thereby effectively reducing a problem that the planar convex ring "warps" from the annular caulking groove.

Usually, the inner decoration member 20 may be made of a metal material. However, the inner decoration member 20 made of the metal material causes a large overall weight of the housing assembly. In this solution, to reduce a weight of the housing assembly, the inner decoration member 20 may be made of a plastic material, to reduce the weight of the housing assembly. During preparation, the inner decoration member 20 may be prepared by using an injection molding process, to prepare an integrally formed injection molded part. The inventors find that because processing processes of the inner decoration member 20 made of the metal material and the inner decoration member 20 made of the plastic material are different, a difference between processing tolerances of the inner decoration member 20 made of the metal material and the inner decoration member 20 made of the plastic material is large (a manufacturing tolerance of the inner decoration member 20 of the injection molded part is greater than a manufacturing tolerance of the inner decoration member 20 made of a metal part). Therefore, after directly bonded to the inner decoration member 20 of the injection molded part by using the second sealing adhesive layer 50 adhered to the inner decoration member made of the metal part, an adhesive effect of the second sealing adhesive layer 50 on the plastic inner decoration member 20 is reduced. In this solution, the inventors have recognized the foregoing problem, and increase a thickness of the second sealing adhesive layer 50 and set the thickness of the second sealing adhesive layer 50 to 0.35 ± 0. 05 mm, for example, 0.30 mm, 0.31 mm, 0.32 mm, 0.33 mm, 0.34 mm, 0.35 mm, 0.36 mm, 0.37 mm, 0.38 mm, 0.39 mm, and 0.40 mm, so that the set thickness of the second sealing adhesive layer 50 in this embodiment can overcome a problem that the adhesive effect of the second sealing adhesive layer 50 is reduced due to the manufacturing tolerance brought by replacing the material of the inner decoration member 20 with plastic, and can implement good sealing between the first outer sealing interval ring 231 and the exposed annular part 412.

As shown in FIG. 3, the outer housing 40 of the housing assembly has a plurality of types of materials. The outer housing 40 made of a PU material has a plurality of advantages such as durability, softness, and anti-fingerprint, which may be used in this embodiment. The outer housing 40 includes: a base layer 40a and a polyurethane layer 40b that are laminated, where the polyurethane layer 40b is located on an outer surface of the outer housing 40, and the base layer 40a is located on an inner surface of the outer housing 40. The base layer 40a and the polyurethane layer 40b may be prepared as the outer housing 40 of the housing assembly by using a hot pressing process. By using the second sealing adhesive layer 50 having the thickness of 0.35 ± 0. 05 mm in the foregoing embodiment, good sealing and bonding can be implemented between the outer housing 40 (which is formed by hot pressing the laminated base layer 40a and polyurethane layer 40b) made of the PU material and the first outer sealing interval ring 231 in this embodiment.

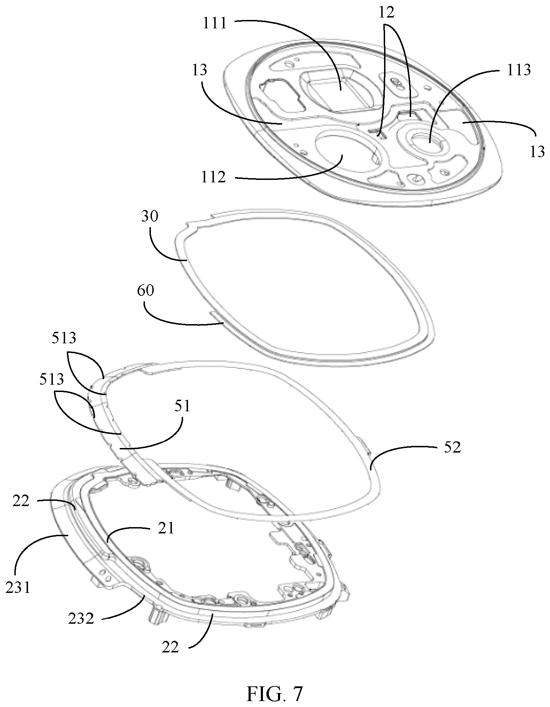

FIG. 7 is a schematic structural exploded view of some components of the housing assembly according to an embodiment of the present invention. As shown in FIG. 7, the first outer sealing interval ring 231, the exposed annular part 412, and the double-sided adhesive layer 511 have an annular structure. The manufacturing tolerance of the double-sided adhesive layer 511 is large, and it is difficult to completely match a radian of the prepared double-sided adhesive layer 511 with a size of the first outer sealing interval ring 231 and a size of the exposed annular part 412. In this solution, a plurality of notches 513 are provided at intervals on at least one of an edge of the inner sealing ring 21 and an edge of the outer sealing ring 23 of the double-sided adhesive layer 511, so that the radian of the double-sided adhesive layer 511 may be conveniently adjusted, to implement that the radian of the double-sided adhesive layer 511 matches a size of a radian of the first outer sealing interval ring 231 and a size of a radian of the exposed annular part 412, to perform good sealing and adhering.

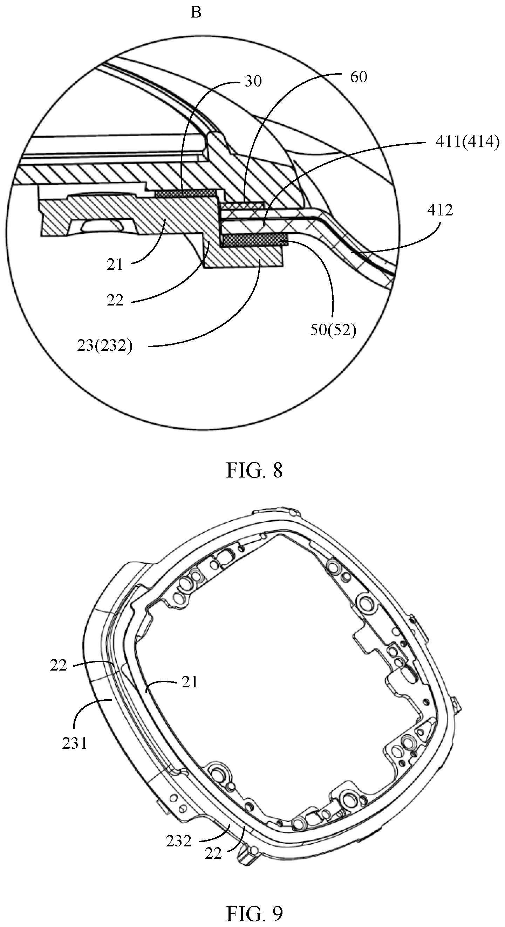

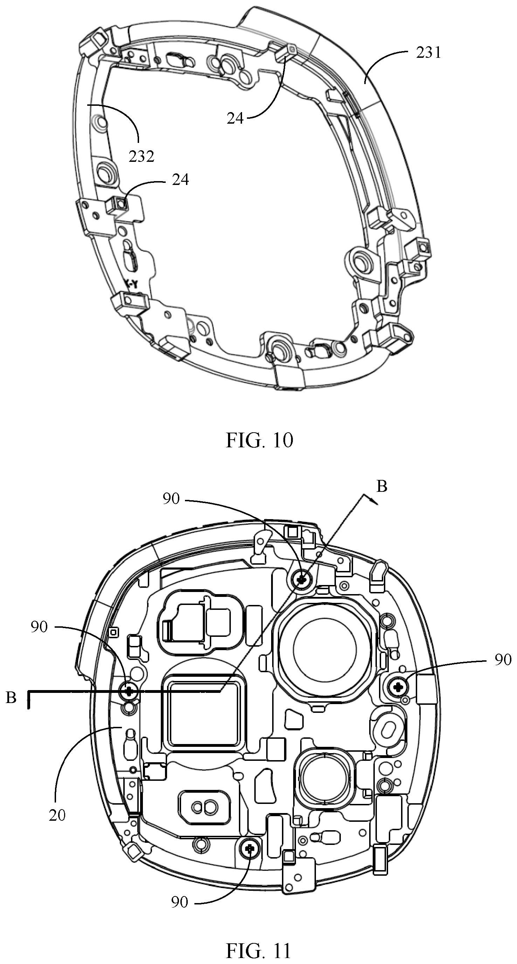

FIG. 8 is an enlarged view of B in FIG. 2. FIG. 9 is a schematic diagram of a structure of the inner decoration member 20 of the housing assembly from a first perspective according to an embodiment of the present invention. FIG. 10 is a schematic diagram of a structure of the inner decoration member 20 of the housing assembly from a second perspective according to an embodiment of the present invention. As shown in FIG. 8, FIG. 9, and FIG. 10, during specific implementation, when the large-size camera is mounted inside the electronic device, required space may be only in a specific direction. Therefore, in this embodiment of this solution, the first outer sealing interval ring 231 is not limited to a complete outer sealing ring 23, and may be a partial outer sealing ring 23. During implementation, the outer sealing ring 23 further includes a second outer sealing interval ring 232, and the second outer sealing interval ring 232 extends to the embedded annular part 411. The second sealing adhesive layer 50 includes a second interval adhesive layer 52, and the second interval adhesive layer 52 is sealedly connected between the second outer sealing interval ring 232 and the embedded annular part 411. The second outer sealing interval ring 232 is located below the orthographic projection of the outer decoration member 10 in the outer housing 40, so that the second interval adhesive layer 52 may be sandwiched between the outer decoration member 10 and the inner decoration member 20. After the inner decoration member 20 and the outer decoration member 10 are relatively fastened, the second interval adhesive layer 52 may form a good bonding effect on the inner decoration member 20 and the outer housing 40.

As shown in FIG. 8, in another aspect, because the second outer sealing interval ring 232 is located below the orthographic projection of the outer decoration member 10 in the outer housing 40, a deeper annular caulking groove may be formed, so that a size of the embedded outer housing 40 is larger. During implementation, the second outer sealing interval ring 232, the retaining ring 22, and the inner side of the outer edge of the outer decoration member 10 form a second interval groove of the annular caulking groove. The embedded annular part 411 includes a second interval inner wall 414. The second interval inner wall 414 is embedded in the second interval groove. In the second interval groove, the distance between the outer surface of the retaining ring 22 and the edge of the outer decoration member 10 ranges from 2.5 mm to 4 mm. In comparison with the first interval groove, the retaining ring 22 of the second interval groove is closer to the center of the through hole of the outer housing 40. Therefore, the second interval groove is deeper, the embedded annular part 411 of the outer housing 40 is longer, the connection is more stable, and the second interval inner wall 414 embedded in the second interval groove is not easy to be detached and cause a problem of warping. In other words, during implementation, the inner decoration member 20 uses a manner in which a part (the first outer sealing interval ring 231) is "expanded outward" and a part (the second outer sealing interval ring 232) "is not expanded outward", so that a space mounting requirement of the large-size camera can be taken into consideration, and a stability requirement of the outer housing 40 of the housing assembly can be further satisfied.

The first sealing adhesive layer may be a sealing layer formed by curing the fluid adhesive.

As shown in FIG. 7, during implementation, to improve assembly efficiency, the first interval adhesive layer 51 is connected to the second interval adhesive layer 52 end-to-end in a staggered manner, to form the annular second sealing adhesive layer 50. The first outer sealing interval ring 231 is connected to the second outer sealing interval ring 232 end-to-end, to form the annular outer sealing ring 23. The annular second sealing adhesive layer 50 may be conveniently adhered to the annular outer sealing ring 23.

As shown in FIG. 7 and FIG. 8, to further improve stability of connections between the outer housing 40 and the inner and outer decoration rings, the housing assembly further includes: a fixed adhesive layer 60. The second interval inner wall 414 is connected to the outer decoration member 10 by using the fixed adhesive layer 60. An adhesive layer groove may be further provided on the inner side of the outer decoration member 10, and the fixed adhesive layer 60 is disposed in the adhesive layer groove.

As shown in FIG. 3, at a position of the first interval inner wall 413 of the embedded annular part 411 of the outer housing 40, the first interval inner wall 413 may directly abut against the outer decoration member 10, and the fixed adhesive layer 60 is not disposed, so that an amount of "rising" (close to the outer decoration ring) of a bottom of the retaining ring 22 can be obtained, and rising space can be provided for the camera at a bottom of the outer decoration ring.

In this embodiment of the present invention, at a position at which a large-volume camera is mounted, the inner decoration member 20 may use the planar inner sealing ring 21 and the curved first outer sealing interval ring 231, and the second sealing adhesive layer 50 may use the planar first sealing adhesive layer 30 and the curved first interval adhesive layer 51 to cooperate with the glue dispensing layer, to implement sealing at an opening of the outer housing 40. At a position at which a small-volume camera is mounted, the inner decoration member 20 may use the planar inner sealing ring 21 and the planar second outer sealing interval ring 232, and the second sealing adhesive layer 50 may use the planar first sealing adhesive layer 30 and the planar second interval adhesive layer 52 to cooperate with the glue dispensing layer, to implement sealing at the opening of the outer housing 40. By using this embodiment of this solution, large mounting space can be provided for the camera without expanding the outer decoration member 10, thereby keeping the size of the outer decoration member 10 small.

The housing assembly in this embodiment is applicable to a waterproof electronic device, and can reach a protection rating of IPX8. In IPX8, X represents a dustproof rating of the electronic device, and 8 represents a waterproof rating of the electronic device. When the electronic device is immersed in water, and a distance between a top of the electronic device and a water surface is 1.5 m to 30 m. For continuous 30 min, the electronic device can work normally without any water leakage.

When the IPX8 rating of the electronic device is implemented, the electronic device has high air tightness. When the outer housing 40 of the electronic device is pressed, an internal pressure of the electronic device greatly changes. However, inside the electronic device, an electronic element (like a speaker) thereof tends to work abnormally when an atmospheric pressure of the electronic device greatly changes. As shown in FIG. 4 and FIG. 5, in this embodiment, to overcome the foregoing problem, the housing assembly further includes: the waterproof and breathable layer 70, and the window cover plate 80.

A window caulking groove is provided on the outer side surface of the outer decoration member 10, and the at least one camera window 11 and a through ventilation port 12 are disposed at a bottom of the window caulking groove. The window cover plate 80 is disposed in the window caulking groove, and covers the at least one camera window 11. The breathable gap 512 exists between a peripheral edge of the window cover plate 80 and a peripheral edge of the window caulking groove. At least one ventilation channel 13 communicating the ventilation port 12 and the breathable gap 512 is further disposed at the bottom of the window caulking groove. The waterproof and breathable layer 70 covers the ventilation port 12. Specifically, the waterproof and breathable layer 70 may be adhered to the ventilation port 12 by using an annular adhesive layer 71 matching a shape of the ventilation port 12. The housing assembly is used in the electronic device. After the outer housing 40 is pressed, because a waterproof and breathable membrane communicates with an inside and an exterior of the outer housing 40 of the electronic device, a pressure difference between a pressure of the inside and a pressure of the exterior of the outer housing 40 of the electronic device can be reduced. In addition, the waterproof and breathable membrane may further prevent external water from entering the outer housing 40 of the electronic device, thereby achieving a waterproof and dustproof effect.

It is easily understood that a quantity and routes of the ventilation channels 13 may be determined based on a specific structural layout of the camera window 11. Specifically, there may be at least two ventilation channels 13, and the at least two ventilation channels 13 extend to different directions of the ventilation port 12 and are in communication with the breathable gaps 512 in a periphery of the window cover plate 80, and the breathable gaps 512 in the periphery of the window cover plate 80 are communicated. After a ventilation channel 13 is blocked, another ventilation channel 13 may further be used to implement a ventilation function.

As shown in FIG. 10, during implementation, the inner decoration member 20 further includes: at least one support member 24 extending toward the interior of the outer housing 40. After the housing assembly is used in the electronic device, a mainboard is disposed in the electronic device, and the support member 24 of the inner decoration member 20 may be supported on the mainboard, to stably support the inner decoration member 20. Specifically, there may be two support members 24. The two support members 24 are respectively disposed at a first position at which the inner sealing ring 21 is close to the first outer sealing interval ring 231 and at a second position at which the inner sealing ring 21 is close to the second outer sealing interval ring 232. The outer housing made of the PU material is soft, and the support member 24 at the first position may provide stable support for the outer housing made of the PU material.

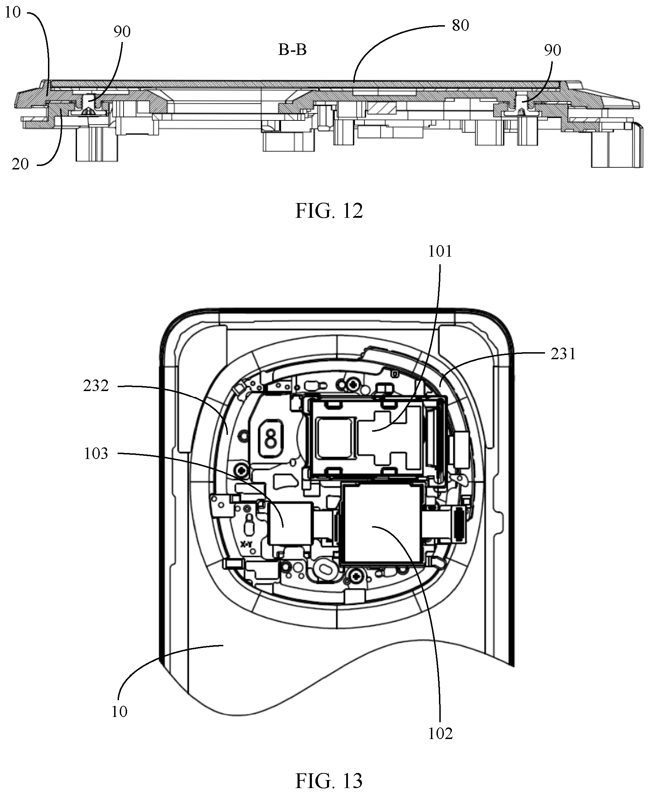

FIG. 11 is a schematic diagram of a rear structure of a combination of the inner decoration member 20 and the outer decoration member 10 of the housing assembly according to an embodiment of the present invention. FIG. 12 is a schematic cross-sectional view of a structure taken along B-B in FIG. 11. As shown in FIG. 11 and FIG. 12, in implementing a fastened connection between the outer decoration member 10 and the inner decoration member 20, a fastening screw may be used for connection. The housing assembly further includes: at least one locking screw 90, where the locking screw 90 is inserted through a through hole of the inner sealing ring 21 of the inner decoration member 20, and is locked to an internal thread of the outer decoration member 10.

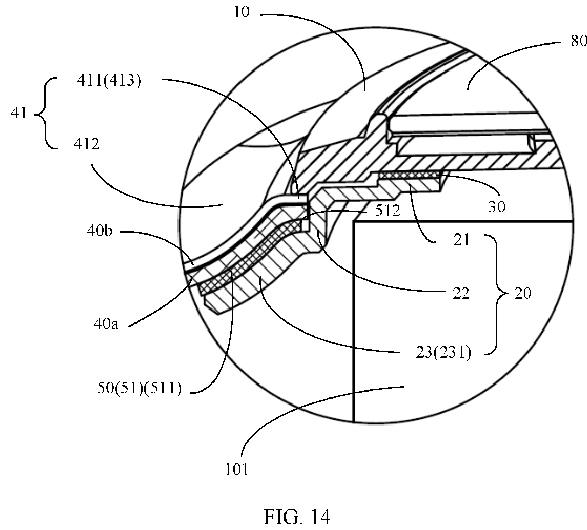

FIG. 13 is a schematic diagram of an internal partial structure of an electronic device according to an embodiment of the present invention. As shown in FIG. 13 and FIG. 14, FIG. 14 is a schematic partial cross-sectional view of a structure of a position of a first camera 101 of the electronic device according to an embodiment of the present invention.

An electronic device according to another embodiment of the present invention is provided, including: the housing assembly according to the foregoing embodiments and at least one camera, where an image acquisition end of each camera faces a camera window 11 corresponding to the camera.

Specifically, the at least one camera includes a first camera 101, at least one camera window 11 includes a first window 111, and an image acquisition end of the first camera 101 faces the first window 111. A first corner of the first camera 101 is located at a corner of the inner decoration member 20 close to the first outer sealing interval ring 231. The first camera 101 is a periscope camera.

During implementation, avoidance space is reserved between the first corner of the first camera 101 and the inner sealing ring 21 and the retaining ring 22 of the inner decoration member 20, to reduce a risk that the inner decoration member 20 touches the first camera 101 after the outer housing is pressed and deformed.

Specifically, the at least one camera includes a second camera 102 and a third camera 103, the at least one camera window 11 includes a second window 112 and a third window 113, an image acquisition end of the second camera 102 faces the second window 112, and an image acquisition end of the third camera 103 faces the third window 113.

The first camera 101 has a rectangular structure, a size of the second camera 102 and a size of the third camera 103 are separately smaller than a size of the first camera 101, the second camera 102 and the third camera 103 are located on a side of the first camera 101 in a width direction, and the second camera 102 and the third camera 103 are arranged in a length direction of the first camera 101.

In the inner decoration member 20, the outer sealing ring 23 includes the second outer sealing interval ring 232, the second outer sealing interval ring 232 extends to the embedded annular part 411 of the outer housing 40, the second sealing adhesive layer 50 includes the second interval adhesive layer 52, and the second interval adhesive layer 52 is sealedly connected between the second outer sealing interval ring 232 and the embedded annular part 411. A first corner of the second camera 102 is located at a corner of the inner decoration member 20 close to the second outer sealing interval.

By using the foregoing camera layout manner, a length of the curved first interval adhesive layer 51 can be reduced as much as possible, so that a proportion of the length of the curved first interval adhesive layer 51 to a length of the second sealing adhesive layer 50 is less than or equal to 40%. It is easily understood that reducing the proportion of the length of the curved first interval adhesive layer 51 to the length of the second sealing adhesive layer 50 can improve stability of the second sealing adhesive layer 50 sealedly connected between the annular inner wall of the through hole and the outer sealing ring.

During implementation, avoidance space is reserved between the first corner of the second camera 102 and the inner sealing ring 21 and the retaining ring 22 of the inner decoration member 20, to reduce a risk that the inner decoration member 20 touches the second camera 102 after the outer housing is pressed and deformed.

It should be noted that, in examples and specification of this patent, relational terms such as first and second are merely used to distinguish one entity or operation from another entity or operation, but do not necessarily require or imply any such actual relationship or order between these entities or operations. Moreover, the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Without further limitations, an element defined by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A housing assembly, comprising:
an outer decoration member, wherein at least one camera window is disposed on the outer decoration member;
an inner decoration member, comprising an inner sealing ring, a retaining ring, and an outer sealing ring, wherein the inner sealing ring is stacked on an inner periphery of the outer decoration member, the retaining ring is bent and extends from an outer edge of the inner sealing ring toward an inner side of the outer decoration member, and is connected to the outer sealing ring, and the outer sealing ring, the retaining ring, and an inner side of an outer edge of the outer decoration member form an annular caulking groove that opens outward;
a first sealing adhesive layer, sealedly connected between the inner sealing ring and the inner periphery of the outer decoration member;
an outer housing, wherein the outer housing has a through hole, an annular inner wall of the through hole of the outer housing comprises an embedded annular part close to a center of the through hole, and an exposed annular part away from the center of the through hole and connected to the embedded annular part, the embedded annular part is embedded in the annular caulking groove, and the exposed annular part is located outside the annular caulking groove; and
a second sealing adhesive layer, sealedly connected between the annular inner wall of the through hole and the outer sealing ring, wherein
the outer sealing ring comprises a first outer sealing interval ring, and the first outer sealing interval ring extends to the exposed annular part of the outer housing; and
the second sealing adhesive layer comprises a first interval adhesive layer, and the first interval adhesive layer is sealedly connected between the first outer sealing interval ring of the outer sealing ring and the exposed annular part.

2. The housing assembly according to claim 1, wherein
the first outer sealing interval ring, the retaining ring, and the inner side of the outer edge of the outer decoration member form a first interval groove of the annular caulking groove;
the embedded annular part comprises a first interval inner wall, and the first interval inner wall is embedded in the first interval groove; and
in the first interval groove, a distance between an outer surface of the retaining ring and an edge of the outer decoration member ranges from 0.5 mm to 2 mm.

3. The housing assembly according to claim 1, wherein
the exposed annular part extends toward the center of the through hole, and forms a curved convex ring away from an inner side of the outer housing; and
the first interval adhesive layer comprises: a double-sided adhesive layer matching a shape of the curved convex ring and having a curved shape.

4. The housing assembly according to claim 3, wherein
the first interval adhesive layer further comprises: the double-sided adhesive layer and a glue dispensing layer, wherein
the double-sided adhesive layer matches the shape of the curved convex ring and has the curved shape; and
the glue dispensing layer fills a gap between the double-sided adhesive layer and the retaining ring, and the glue dispensing layer is formed by curing a fluid adhesive.

5. The housing assembly according to claim 4, wherein
the double-sided adhesive layer has an annular structure, and a plurality of notches are provided at intervals on at least one of an edge of an inner sealing ring and an edge of an outer sealing ring of the double-sided adhesive layer.

6. The housing assembly according to claim 4, wherein
the embedded annular part extends toward the center of the through hole, and forms a planar convex ring.

7. The housing assembly according to claim 3, wherein
the inner decoration member is made of a plastic material.

8. The housing assembly according to claim 7, wherein
a thickness of the second sealing adhesive layer is 0.35 ± 0. 05 mm.

9. The housing assembly according to claim 8, wherein
the outer housing comprises: a base layer and a polyurethane layer that are laminated, wherein the polyurethane layer is located on an outer surface of the outer housing, and the base layer is located on an inner surface of the outer housing.

10. The housing assembly according to claim 1, wherein
the outer sealing ring comprises a second outer sealing interval ring, and the second outer sealing interval ring extends to the embedded annular part; and
the second sealing adhesive layer comprises a second interval adhesive layer, and the second interval adhesive layer is sealedly connected between the second outer sealing interval ring and the embedded annular part.

11. The housing assembly according to claim 10, wherein
the second outer sealing interval ring, the retaining ring, and the inner side of the outer edge of the outer decoration member form a second interval groove of the annular caulking groove;
the embedded annular part comprises a second interval inner wall, and the second interval inner wall is embedded in the second interval groove; and
in the second interval groove, a distance between an outer surface of the retaining ring and an edge of the outer decoration member ranges from 2.5 mm to 4 mm.

12. The housing assembly according to claim 10, wherein
the first interval adhesive layer is connected to the second interval adhesive layer end-to-end in a staggered manner, to form the annular second sealing adhesive layer; and
the first outer sealing interval ring is connected to the second outer sealing interval ring end-to-end, to form the annular outer sealing ring.

13. The housing assembly according to claim 11, further comprising:
a fixed adhesive layer, wherein
the second interval inner wall is connected to the outer decoration member by using the fixed adhesive layer; and
the first interval inner wall abuts against the outer decoration member.

14. The housing assembly according to claim 1, further comprising:
a waterproof and breathable layer; and
a window cover plate, wherein
a window caulking groove is provided on an outer side surface of the outer decoration member, and the at least one camera window and a through ventilation port are disposed at a bottom of the window caulking groove;
the window cover plate is disposed in the window caulking groove and covers the at least one camera window; and
a breathable gap exists between a peripheral edge of the window cover plate and a peripheral edge of the window caulking groove, at least one ventilation channel communicating the ventilation port and the breathable gap is further provided at the bottom of the window caulking groove, and the waterproof and breathable layer covers the ventilation port.

15. The housing assembly according to claim 1, wherein
the inner decoration member further comprises: at least one support member extending toward an interior of the outer housing.

16. The housing assembly according to claim 1, further comprising:
at least one locking screw, wherein the locking screw is inserted through a through hole of the inner sealing ring of the inner decoration member, and is locked to an internal thread of the outer decoration member.

17. An electronic device, comprising:
the housing assembly according to any one of claims 1 to 16; and
at least one camera, wherein an image acquisition end of each camera faces a camera window corresponding to the camera.

18. The electronic device according to claim 17, wherein
the at least one camera comprises a first camera, the at least one camera window comprises a first window, and an image acquisition end of the first camera faces the first window;
a first corner of the first camera is located at a corner of the inner decoration member close to the first outer sealing interval ring; and
the first camera is a periscope camera.

19. The electronic device according to claim 18, wherein
the at least one camera comprises a second camera and a third camera, the at least one camera window comprises a second window and a third window, an image acquisition end of the second camera faces the second window, and an image acquisition end of the third camera faces the third window;
the first camera has a rectangular structure, a size of the second camera and a size of the third camera are separately smaller than a size of the first camera, the second camera and the third camera are located on a side of the first camera in a width direction, and the second camera and the third camera are arranged in a length direction of the first camera;
in the inner decoration member, the outer sealing ring comprises the second outer sealing interval ring, the second outer sealing interval ring extends to the embedded annular part of the outer housing, the second sealing adhesive layer comprises the second interval adhesive layer, and the second interval adhesive layer is sealedly connected between the second outer sealing interval ring and the embedded annular part; and
a first corner of the second camera is located at a corner of the inner decoration member close to the second outer sealing interval.
